# EUROPEAN PATENT SPECIFICATION

(11) **EP 4 555 364 B1**
(45) Date of publication and mention of the grant of the patent: **24.06.2026**
(21) Application number: 23741641.7
(22) Date of filing: 11.07.2023
(51) Int. Cl.: G02B 6/44, F16L 37/092, F16L 37/10, G02B 6/52

(54) **A TUBE COUPLING**
ROHRKUPPLUNG
RACCORD DE TUBES

(30) Priority: 13.07.2022 GB 202210289
(43) Date of publication of application: 21.05.2025
(73) Proprietor: Reliance Worldwide Corporation (UK) Limited, West Drayton, Middlesex UB7 8JL (GB)
(72) Inventor: ANSELL, Glen, Edgware HA8 8HF (GB)
(74) Representative: Boult Wade Tennant LLP
(86) International application number: PCT/EP2023/069142
(87) International publication number: WO 2024/013147

(56) References cited:
- EP-A1- 1 433 992
- EP-A1- 2 131 089
- WO-A1-2021/005319
- US-A1- 2021 239 248

## Description

The present disclosure relates to a tube coupling. It has a particular application as fibre optic cable connector for use above or below ground. However, the concept can be applied more broadly to other types of connector.

Such fibre optic connectors are used in the laying of fibre optic cables. The cables are used, for example, to provide a fibre optic cable connection from a junction box to a building such as an office or residence in order to provide a connection for internet data.

The fibre optic cables are provided in bundles of individual fibres which can be up to several kilometres long. The fibre bundles are fed through tubes (often referred to as microducts) which are typically 100 metres long, but can be as long as 500 metres. A number of tubes therefore need to be connected together in order to support the full run of the fibre bundle.

Because of the manner of their use, there are number of demands on a fibre optic cable connector.

Its outer diameter must be as small as possible in order to minimise bulk as the connectors are often grouped together in large numbers.

The connectors also need to be highly impact resistant. Cables are usually buried in the ground and, for maintenance, they need to be dug up. This is generally done by a labourer with a spade, and the first that the labourer will know if the presence of the cable is when it is struck by the spade. The connectors therefore need to be sufficiently robust to resist such an impact. In practice, they need to pass a '15J impact test'.

The connectors have a connection at either end which attaches to and retains the tube within the connector. This is done using a collet or grab ring. This grips on the outer wall of the tube and any movement which tends to pull the tube out the connector causes the collet to tighten its grip on the tube in a well-known manner. In order to release the tube, the collet can be manually displaced inwardly of the connector. This prevents the collet from gripping the tube allowing the tube to be withdrawn from the connector.

It is a requirement of the fibre optic cable connectors that the collet must be locked in place to prevent accidental release of the tube.

This is conventionally done using a locking clip which clips between the end of the body of the connector and a collet ring thereby preventing axial movement between the body and the collet.

These clips have a number of drawbacks. They are flimsy and exposed components and often break. Because they are exposed, they become clogged with dirt making them potentially difficulty to remove. They can become accidentally dislodged during installation and are then easily lost making the connector useless unless spare clips are carried. The clips can also be displaced during installation. The installer will not necessarily know that this has happened as this may happen only when the connector is covered with earth. These issues were addressed in our earlier WO 2021/005100 and WO 2021/005041 which disclose a new low-profile connector with impact resistant and anti-snagging features. Of greater relevance is WO 2021/005319.

This discloses to the same connector but relates to the manner in which the connector is locked.

In particular, it discloses the idea of a collet lock being formed in the collet itself and that the body and collet are provided with cam features which allow the collet to be rotated into a position in which its axial movement is limited. The tube is locked within the connector as the collet is unable to move axially and therefore cannot be disengaged from the tube.

This application acknowledges our own earlier EP 2131089 which discloses a locking ring designed for use in a different type of connecter.

EP 2131089 discloses the idea of a locking ring which is rotatably mounted on the body. The body is provided with a cam surface which cooperates with a cam follower on the locking ring. Rotation between the body and the locking ring changes the axial separation between the two components. The end of locking ring abuts against the collet ring. In a locked position, the axial separation between the locking ring and body is at its greatest. The engagement between the locking ring and the collet ring prevents axial movement of the collet such that the collet cannot be inwardly displaced into the position in which the tube can be released.

As acknowledged in WO2021/005319 this connector is not designed for use with a fibre optic cable connector and, indeed, it would be unsuited to such a purpose. The locking ring fits over the external surface of the body. This adds to the bulk connector which is against the requirement in a fibre optic cable connector for the outer diameter to be as small as possible. The locking ring is exposed to dirt such that, in use, dirt particles could get into the locking ring and jam it in the locking position. Further, the locking ring is also exposed to damage during installation and the maintenance operations which can either cause the locking ring to fail, or become stuck in the locked position.

This problem is solved in WO 2021/005319 by providing the lock mechanism using cam feature directly between the body and the collet. This eliminates the need for the external locking ring. The collet is provided with a pair of axially extending lugs which allow the user to grip the collet to unlock it if the tube is to be released.

This design is successful in overcoming the above-mentioned draw backs. However, the connecter is designed to be used across a wide range of sizes and also to be used globally in an external environment. In certain circumstances, particularly in a colder climate where a user is wearing gloves and particularly when working with smaller fittings, the lugs may not be easy to grip.

According to the present disclosure, there is provided a tube coupling according to claim 1.

In EP 2131089 the locking ring is rotatable with respect to the collet. It does not rotate with it. As set out above, EP 2131089 may be unsuitable for use with a fibre optic cable connector as the locking ring would be exposed to dirt and damage. With the present adaptation, the locking mechanism in the form of the complementary cam features is still provided between the body and the collet and is therefore internal to the connector. It is just the locking actuator ring which is external to the connector. The sole function of the locking actuator ring is to allow the user to grip and turn the collet. As such, any dirt underneath the locking ring will not interfere with the locking mechanism itself. Further, any minor damage to the locking actuator ring during installation, such as chipping or cracking, will not prevent unlocking as the user is still able to grasp the locking actuator ring and rotate the collet.

The presence of the locking actuator ring does slightly increase the outer diameter of the connector. However, this increase is relatively limited as the locking actuator ring can have a relatively low profile and abuts directly against the external face of the coupling body.

The collet and locking actuator ring may each be provided with at least one complementary engagement feature that fits together so that the locking actuator ring is rotatable with the collet. This may take the form of at least one lug projecting from the collet ring axially away from the open end of the throughway, and by the locking actuator ring having at least one complimentary recess to receive a respective lug. This has the benefit of working with our existing design in which the collet is already provided with the lugs. The locking actuator ring can then be provided as a separate cap which is fitted over and retained on the open end of the connector to engage the complementary engagement features.

Alternatively, the collet and locking actuator may be integrally formed as a single moulding.

In this case, for ease of moulding, the part of the locking actuator ring which extends over a radially outer wall of the coupling body at the open end may circumferentially intermittent.

This can also apply to a separate collet and locking actuator

In order to improve grip, the part of the locking actuator ring which extends over a radially outer wall of the coupling body at the open end has gripping features on its outer surface. These may be, for example, grooves, ribs or knurling.

The locking actuator ring may be snap fitted to the end of the coupling body. This provides for a simple and reliable way to attach the locking actuator ring. It may also allow the retrofitting of an existing connector with a locking actuator ring. This can take advantage of existing upstanding features on the coupling body to provide the snap fit.

Examples of connectors in accordance with the present invention will now be described with reference to the accompanying drawings, in which:
Fig.1 is a cross-sectional view of a first connector with the locking actuator rings shown separately;
Fig. 2 is a view similar to Fig. 1 with the locking actuator rings shown in place;
Fig. 2A shows the detail shown in circle A in Fig. 2;
Fig. 2B shows the detail shown in circle B in Fig. 2;
Fig. 3 is an exploded perspective view of a connector within the coupling body from one end;
Fig. 4A is equivalent to Fig. 3 in non-exploded form;
Fig. 4B is a cross-section through a plane in Fig. 4A through the lugs;
Figs. 5A and 5B are views corresponding to Figs. 4A and 4B respectively showing the cartridge and collet in a second angular configuration;
Figs. 6A and 6B correspond to Figs. 5A and 5B that show the tube in situ;
Fig. 7 is a perspective view of the connector in the configuration of Fig.1;
Fig. 8 is a perspective of the connector in the configuration of Fig. 2;
Figs. 9A-9D are views similar to Fig.8 showing various stages of assembly and removal of the tube from the connector;
Fig. 10 is a view similar to Fig. 2 of a second connector;
Fig. 10A shows the detail shown in circle A in Fig. 10;
Fig. 10B shows the detail shown in circle B in Fig. 10;
Fig. 11 is a view similar to Fig. 1 showing a third connector;
Fig. 12 is a cross section of the third connector;
Fig. 13 is a perspective view of the connector in the configuration of Fig.11; and
Fig. 14 is a perspective of the connector in the configuration of Fig. 12.

The inner mechanism of the connector is as described in WO 2021/005319 and reference is made to that document for further details of the connector which is described below.

The connector comprises a coupling body 1 having a generally hollow cylindrical configuration centred on a main axis X. A connector 2 (described in greater detail below) is provided at either end to receive and grip a tube T at each end which is sealed by an O ring 3.

The body 1 is moulded from a non-opaque plastic. The plastic must be such that it is clear enough that a visual inspection externally of the connector allows an operator to determine whether a fibre or fibre bundle is present in the centre of the connector. Ideally, the body should be as close to transparent as possible. However, practical considerations mean that the body will not be truly transparent. Instead, the body is likely to translucent to a sufficient extent that the fibre is visible. Suitable materials are polycarbonate, polystyrene, polyester, acrylic and nylon. The body 1 is formed in a moulding process and can optionally be polished to improve the clarity of the body. As can be seen in the various figures, the outer profile of the body is a smooth configuration which is devoid of external ribs thereby eliminating any stress concentrations and orifices for the accumulation of dirt.

The body 1 is made up of an outer sleeve 5 and an inner sleeve 6 which are connected by at least one web 7 so as to form a gap 10 of generally uniform as described in WO2021/005100.

An annular flange 20 with a curved profile provides an end stop for the tubes as described in WO202/005041.

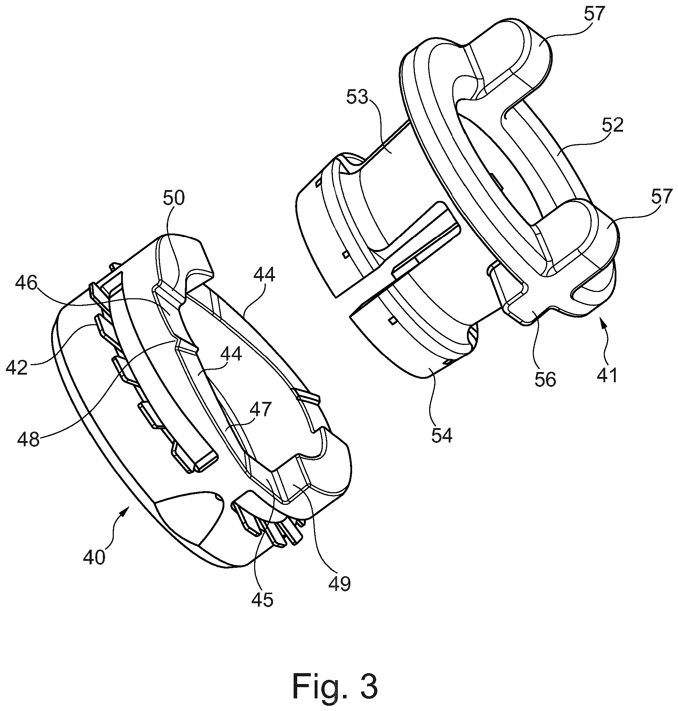

The connectors 2 (one at each end of the body 1) will now be described in greater detail with reference to Figs. 3 to 6B.

The connectors 2 are formed of two components, namely a cartridge 40 and a collet 41.

The cartridge 40 has a generally annular configuration. The outer surface is provided with a plurality of flexible metal teeth 42. The cartridge 40 is inserted into an end of the body 1 until it seats against step 11. The teeth 42 grip the wall of the body 1 to ensure that the cartridge 40 is permanent retained in the body 1. At the end of the cartridge 40 adjacent to the step 11, there is a tapered surface 43 which cooperates with the collet as described below. At the opposite end, the end face of the cartridge 40 is provided with a pair of ramped surfaces 44. Although two such surfaces are shown, there may be a single surface or there may be more than two. Each ramp surface has a low point 45 corresponding to an unlocked configuration and a high point 46 corresponding to a locked configuration within an inclined face 47 in between. A bump 48 is provided at the interface between the high point 46 and the inclined face 47. A similar bump may be provided interface between the incline face 47 and the low point 45. The low point 45 terminates at the first end stop 49 and the high point 46 terminates at a second end stop 50.

Most of the features of the collet 41 are conventional. It has a collet ring 52 from which a plurality of flexible arms 53 extend. Each arm has a head 54 at its distal end as is provided with an inwardly projected metal tooth 55.

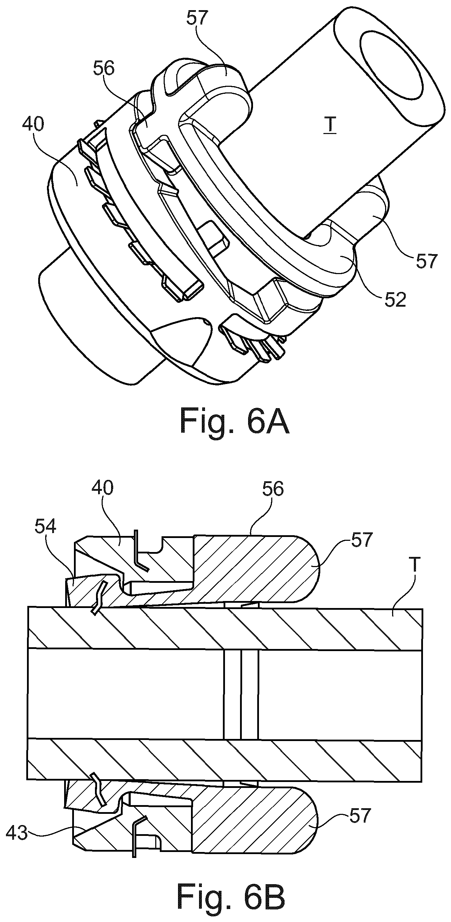

With a tube T inserted for example as shown in Fig. 6B, any movement tending to pull the tube T out of the connector causes the teeth 55 to grip into the tube, this pulls the heads 54 towards the tapered surface 43 on the cartridge 40 deflecting the arms 53 inwardly to provide a progressively increasing gripping force on the tube T. This serves to hold the tube T securely in place. This is the conventional manner in which a collet operates.

A pair of cam followers 56 extend from the collet ring 52 towards the ramped surface 44 on the cartridge 40. Although two followers 56 are shown, in practice there are as many followers 56 as there are ramped surfaces 44. Alternatively, the cam arrangement may be inverted such that the ramped surface(s) is/are on the collet and the follower(s) is/are on the cartridge

The collet ring 52 is also provided with a pair of tabs 57 which extend from the collet ring 52 the opposite direction to the followers 56. As shown in the drawings, the position of the tabs 57 corresponds to a number and position of the followers 56. However, this may not be the case. The components can be offset from one another and there need not be the same number of both.

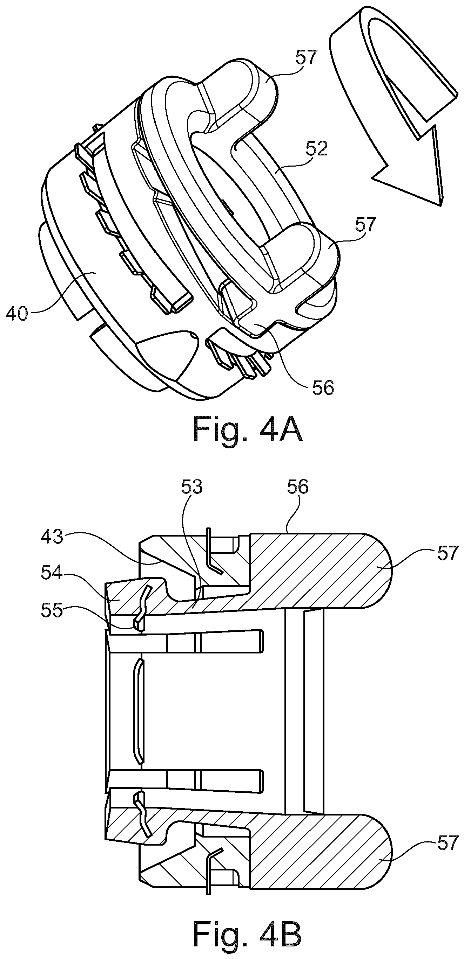

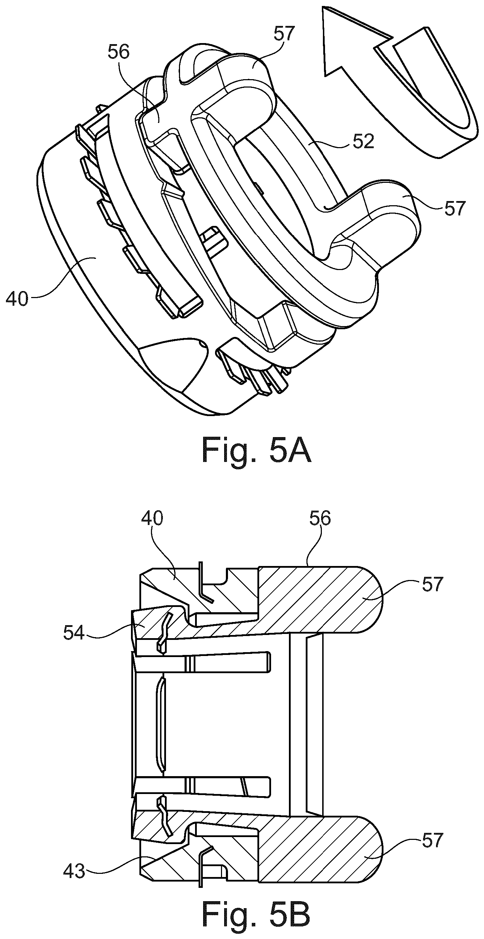

The operation of the collet will now be described with reference to Figs. 4 to 6. The position shown in Figs. 4A and 4B is an unlocked position. In this position, the collet 41 has been rotated such that cam followers 56 abut the first end stops 49 such that the cam followers are at the low point 45. As will be apparent from Fig. 4B (particularly when compared with Fig. 5B) in this position, the collet 41 has a relatively large degree of axial freedom as it can move from the position in which the heads 54 engage with the tapered surface 43 all the way to the left (with reference to Fig. 4B) in the position shown in that figure. If held in that position by a user, the tube T can be withdrawn because the heads 54 are kept away from the tapered surface 43 such that the collet cannot grip the tube. The collet 41 is then rotated in the direction of arrow into the locked position shown in Fig. 5A. In doing so, the followers 56 moves up the inclined faces 47, over the bumps 48, providing a tactile feel to the user that a position has been reached, and onto the high point 46.

As will be appreciated from a comparison of Fig. 4B and Fig. 5B, in the locked position shown in Fig.5B, the collet has nothing like the same degree of freedom as in Fig. 4B so that it cannot be moved and held into an unlocked position where the teeth 55 disengage with the tube T. This is more apparent from Figs. 6A and 6B which show the collet in the same locked position as in Figs. 5A and 5B but with the tube in place. Here it can be seen how the presence of the tube pushes the heads 54 back onto the tapered surface 43.

The only way to remove the tube T in this locked configuration is for the user to grasp the tabs 57, rotate the collet 41 in the direction of arrow in Figs. 4A to the unlocked position, and manually hold the collet in the position shown in Fig 4B while pulling the tube out of the body 1.

The tube T can be inserted with the collet 41 in the unlocked position shown in Figs. 4A and 4B as this allows for more scope for the arms 53 to be deflected upon insertion of the tube. However, as can be seen in Fig. 5B, even in the locked position, there is a small clearance between the head 54 and the tapered surface 43. Thus, it is possible to insert the tube T with the collet in the locked position. This provides a simple assembly process as the user needs only to be told to insert the tube into the collet. They do not need to concern themselves with the locking operation.

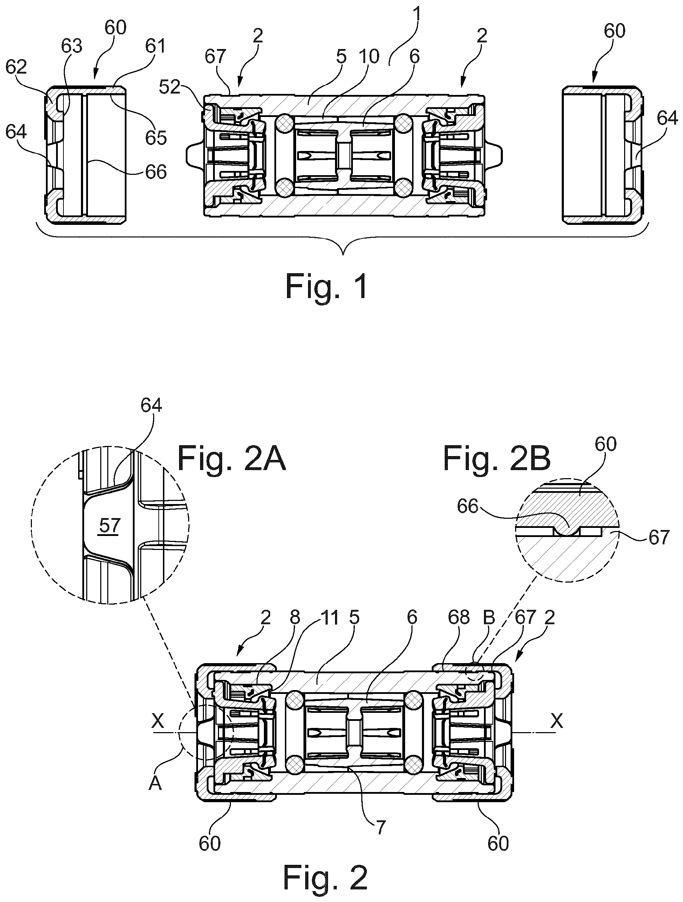

As can be best seen from Figs. 1 and 2, the collet ring 52 is axially set back inside the body 1. However, the tabs 57 extend beyond the end of the body 1. In this position, the collet 41 is protected from external impacts by the body 1. Further, because it is recessed within body 1, it is, to some extent, shielded from the soil in which the cables are buried. With this connector, the only points where dirt can potentially enter internal workings of the connector are between the collet ring 52 and the tube T and between the collet ring 52 and the body 1. However, these are interfaces where tight tolerances can be applied. Any dirt entering here cannot impair the visibility of the fibre F within the body 1. Further, because of the rotary action required to unlock the collet, even if some dirt does enter into these gaps, this is unlikely to jam the collet 41 in place as a rotary motion can readily generate sufficient torque to overcome any such sticking.

The tabs 57 have right angled corners. This allows them to be inserted into the cut end of a tube T and scraped around the inner edge of the tube to remove any burrs which are formed during the cutting operation and which might otherwise create a snagging hazard for the fibre F. The edge may be shaped in a different way to provide more effective burr removal.

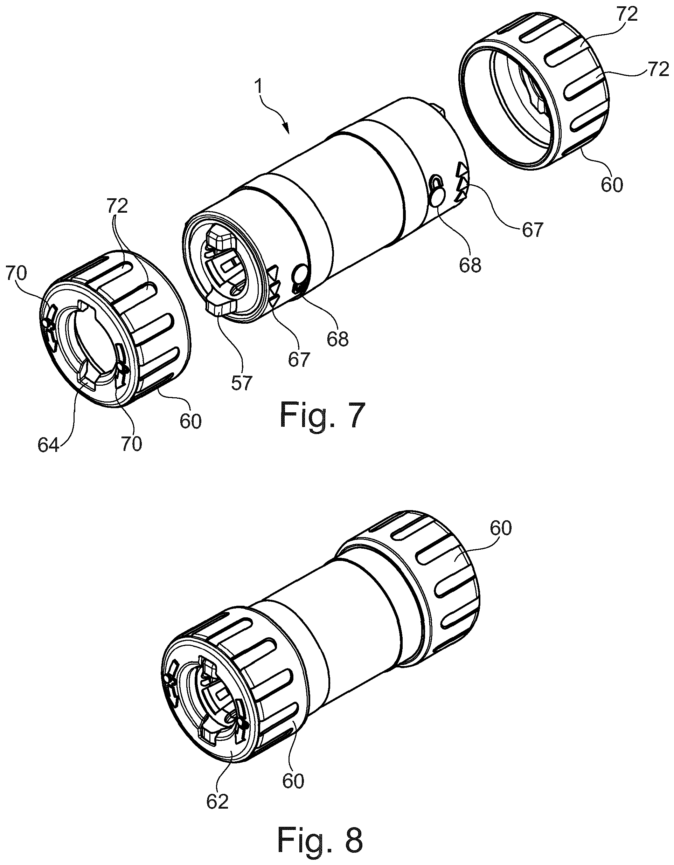

Figs. 1, 2 and 7 to 9 show a respective locking actuator ring 60 is fitted over each end of the body 1. The locking actuator ring 60 has a generally hollow cylindrical configuration with an outer wall 61 dimensioned to fit closely on the outer wall of the body 1, an end flange 62 extending radially inwardly from the outer wall 61 to an inner lip 63. The inner lip 63 is provided with through recesses 64 which have a shape which is generally complimentary to the shape of the tabs 57 as shown in Fig. 2A. The end of the inner lip 63 abuts the collet ring 52 as shown in Fig. 2. The inner face 65 of the outer wall 61 is provided with a circumferential engagement portion, such as a rib or other protuberance, 66 which is configured to engage feature 67, e.g., snap-fit behind feature 67, on the outer face of the body 2. As shown in Fig. 7, the feature in this case is the upstanding arrows 67 which are present on both sides of the connector. These are sufficient to hold the locking actuator rings 60 in place. This allows an unmodified connector to be used to hold the locking actuator ring 60. In addition, or aternatively, the connector can have features such as projecting lugs which are provided specifically to engage with the circumferential rib 66.

Once the connector has been assembled as shown in Fig. 1, the locking actuator rings 60 are then pressed onto each end of the connector until the circumferential rib 66 snaps behind feature 67. In this position, further axial inward movement is prevented by engagement of the inner lip 63 on the collet ring 52. A small amount of outward movement of the locking actuator ring 60 is provided by a gap between arrows 67 and upstanding lock symbols 68 (which again can be replaced by a lug) in which the circumferential rib 66 can slide (see Figs. 2 and 2B). Thus, when the collet moves radially outwardly as described above in relation to Figs. 4 to 6, the locking actuator ring 60 can correspondingly move, e.g., axially outwardly with the collet.

The operation of the connector is now described with reference to Figs. 7 to 9B. The end flange 62 is provided with indicia 70 comprising locked/unlocked symbols and arrows demonstrating to the user which way they need to turn the locking actuator ring 60 in order to lock and unlock it. The symbols 67, 68 on the body 1 are no longer visible in use and serve to retain the locking actuator rings 60 as described above.

The outer face of the locking actuator ring 60 is provided with a series of grooves 72 to facilitate gripping.

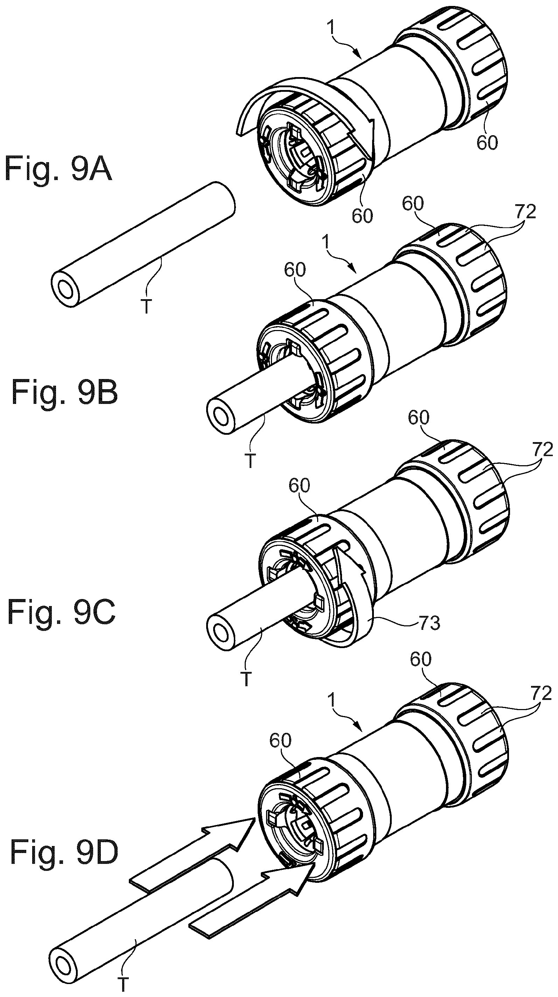

The connector is supplied with the locking mechanism in the locked position as described above in relation to Figs. 5A and 5B. The tube T is then presented to the connector as shown in Fig. 9A and inserted as shown in Fig. 9B. That is all that is required in order to make the connection.

In order to remove the tube T, the locking actuator ring 60 is moved to the unlocked position by rotating in the direction of arrow 73 in Fig. 9C. The engagement between the recesses 64 and tabs 57 causes this rotation to also rotate the collet thereby moving it from the locked position shown in Figs. 5A and 5B to the unlocked position shown in Figs. 4A and 4B. The locking actuator ring 60 is then held down on the coupling body to prevent the teeth 55 from engaging with the tube T to enable it to be removed.

The locking actuator ring 60 is easier for a user to manipulate than the tabs 57. This gives the option of providing a range of connectors in which the smaller diameter connectors are provided with the locking actuator rings 60, while the larger ones are provided just with the tabs 57. As a further option, the locking actuator ring 60 may be deployed in a wider range of connectors in countries with colder climates than they are in countries with warmer climates.

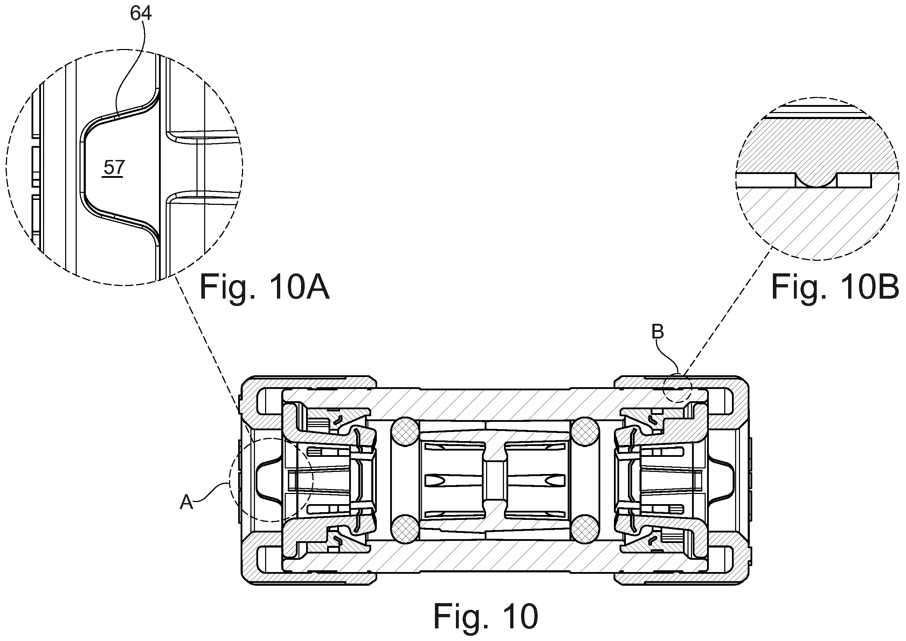

A second example of a connector is shown in Figures 10, 10A and 10B. This is the same as the first connector in all respects except that the recesses 64 are blind recesses that do not fully extend through the locking actuator ring 60 as shown in Fig 2A. This design extends the axial length of the connector but does not leave the tabs 57 exposed at the end of the connector.

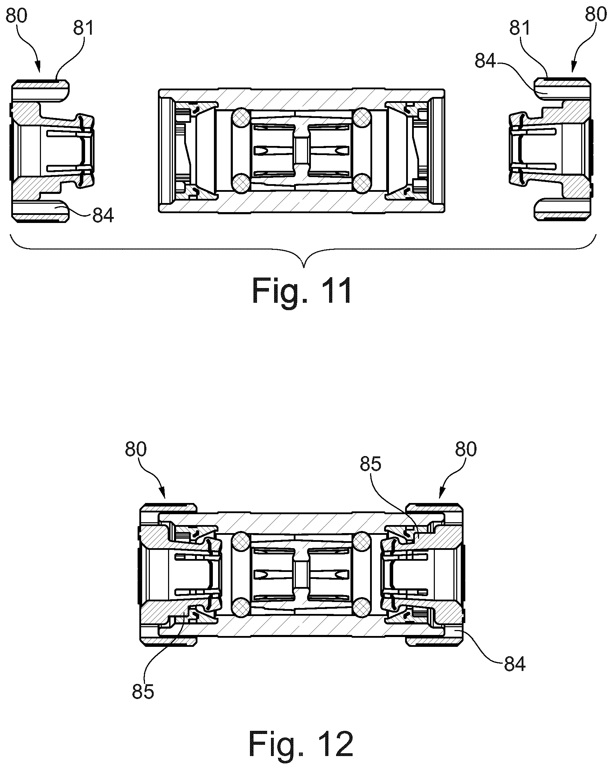

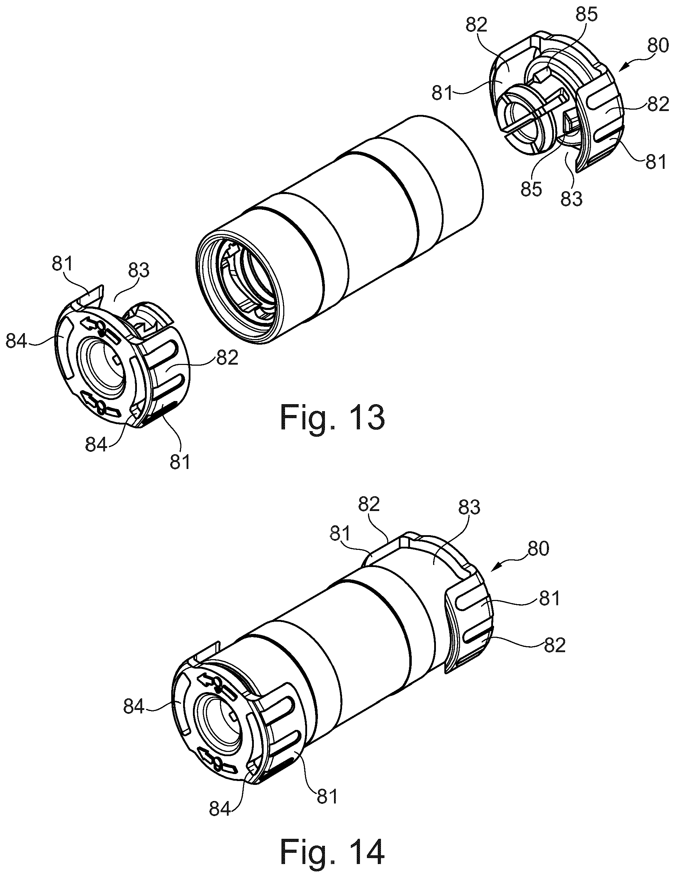

A third example of a connector is shown in Figures 11 to 14. In this case, the collet 41 and the locking actuator ring 60 are integrally formed as a single body 80. The single body 80 is a single moulded component formed from one or more moulds. The moulds may have one or more splits or sections. For example, the moulds may have moulding splits or sections that allow for forming of the collet portion of the body 80. The body 80 has an outer wall 81 which is circumferentially intermittent. In particular, it is formed of two arcuate wall parts 82 on opposite sides of the body 80. These extend for approximately a quarter of the circumference of the body 80 with gaps 83 in between which also extend for approximately a quarter of the circumference of the body 80. This allows the moulding splits which form the inner part of the body 80 to be moved radially outwardly.

The outer wall 81 is also axially shorter than the outer wall 61 as is apparent from a comparison of Figs. 2 and 12. This allows the mould to be able to create the toothed part of the collet without being obstructed by the outer wall 81. The coupling ring 80 is provided with axial openings 84 which have a similar circumferential extent as the outer walls 81 to allow axial insertion of a mould part to form the inner face of the outer wall 81.

Cam followers 85 (equivalent to followers 56 in the first example) are moulded onto the body 80.

The coupling ring 80 is snapped onto the end of the connector as previously described and the locking and gripping operations are also as described above.

## Claims

1. A tube coupling comprising a coupling body (1) having an opened ended throughway to receive a tube, a collet (41) located in the open end of the throughway having a collet ring (52) and a plurality of flexible arms (53) extending generally axially of the collet ring into the throughway, the throughway having a tapered surface (43) convergent towards the open end and the collet arms (53) having heads (54) at their distal ends for engaging both of the tapered surface (43) and a tube (T) extending, in use, through the collet into the throughway to be compressed against the tube by the tapered surface with outward movement of the collet with respect of the throughway to secure the tube in the throughway; and
a collet lock (44, 56, 60) formed on the collet, the collet having a locked rotary position in which the lock holds the collet (41) in an outward tube securing position and an unlocked rotary position in which the collet can move axially with respect to the throughway for release and engagement of a tube by the collet;
wherein one of the coupling body and the collet is provided with a cam surface (44) and the other of the coupling body and the collet is provided with a cam follower (56), the cam surface being provided to provide the locked and unlocked positions
**characterised by** a locking actuator ring (60) rotatable with the collet so as to actuate the lock, the locking actuator ring extending over a radially outer wall of the coupling body (1) at the open end.

2. A tube coupling according to claim 1, wherein the collet (41) and locking actuator ring (60) are each provided with at least one complementary engagement feature (57, 64) that fit together so that the locking actuator ring is rotatable with the collet.

3. A tube coupling according to claim 2, wherein the at least one complementary engagement feature is provided by at least one lug (57) projecting from the collet ring axially away from the open end of the throughway, and by the locking actuator ring having at least one complementary recess (64) to receive a respective lug.

4. A tube coupling according to claim 1, wherein the collet (41) and locking actuator ring (60) are integrally formed.

5. A tube coupling according to claim 4, wherein the collet (41) and locking actuator ring (60) are formed as a single moulding.

6. A tube coupling according to any preceding claim, wherein the part (81) of the locking actuator ring (60) which extends over a radially outer wall of the coupling body (1) at the open end is circumferentially intermittent.

7. A tube coupling according to any preceding claim, wherein the part of the locking actuator ring (60) which extends over a radially outer wall of the coupling body (1) at the open end has gripping features on its outer surface.

8. A tube coupling according to any preceding claim, wherein the locking actuator ring (60) is snap fitted to the end of the coupling body (1).

## Patentansprüche

1. Rohrkupplung, umfassend einen Kupplungskörper (1), der einen offenen Durchgang zum Aufnehmen eines Rohres aufweist, eine im offenen Ende des Durchganges angeordnete Spannzange (41), die einen Spannzangenring (52) aufweist, und eine Vielzahl von flexiblen Armen (53), die sich im Allgemeinen axial vom Spannzangenring in den Durchgang erstrecken, wobei der Durchgang eine sich zum offenen Ende hin verjüngende Oberfläche (43) aufweist und die Spannzangenarme (53) an ihren distalen Enden Köpfe (54) aufweisen, die sowohl mit der verjüngten Oberfläche (43) als auch mit einem Rohr (T) in Eingriff kommen, das sich im Gebrauch durch die Spannzange in den Durchgang erstreckt, und bei einer Auswärtsbewegung der Spannzange relativ zum Durchgang durch die verjüngte Oberfläche gegen das Rohr gepresst werden, um das Rohr im Durchgang zu sichern; und
eine an der Spannzange gebildete Spannzangenverriegelung (44, 56, 60), wobei die Spannzange eine verriegelte Drehstellung, in der die Verriegelung die Spannzange (41) in einer nach außen gerichteten Rohrsicherungsposition hält, und eine entriegelte Drehstellung aufweist, in der sich die Spannzange axial in Bezug auf den Durchgang bewegen kann, um ein Rohr durch die Spannzange zu lösen und in Eingriff zu bringen;
wobei eines des Kupplungskörpers und der Spannzange mit einer Nockenfläche (44) bereitgestellt ist und das andere des Kupplungskörpers und der Spannzange mit einem Nockenfolger (56) bereitgestellt ist, wobei die Nockenfläche bereitgestellt ist, die verriegelte und entriegelte Positionen bereitzustellen,
**gekennzeichnet durch** einen Verriegelungsbetätigungsring (60), der mit der Spannzange drehbar ist, um die Verriegelung zu betätigen, wobei sich der Verriegelungsbetätigungsring am offenen Ende über eine radiale Außenwand des Kupplungskörpers (1) erstreckt.

2. Rohrkupplung nach Anspruch 1, wobei die Spannzange (41) und der Verriegelungsbetätigungsring (60) jeweils mit mindestens einem komplementären Eingriffselement (57, 64) bereitgestellt sind, die so zusammenpassen, dass der Verriegelungsbetätigungsring mit der Spannzange drehbar ist.

3. Rohrkupplung nach Anspruch 2, wobei das mindestens eine komplementäre Eingriffselement durch mindestens einen Ansatz (57), der axial vom offenen Ende des Durchgangs vom Spannzangenring wegragt, und durch den Verriegelungsbetätigungsring, der mindestens eine komplementäre Aussparung (64) zum Aufnehmen eines jeweiligen Ansatzes aufweist, bereitgestellt ist.

4. Rohrkupplung nach Anspruch 1, wobei die Spannzange (41) und der Verriegelungsbetätigungsring (60) einstückig gebildet sind.

5. Rohrkupplung nach Anspruch 4, wobei die Spannzange (41) und der Verriegelungsbetätigungsring (60) als ein einziges Formteil gebildet sind.

6. Rohrkupplung nach einem vorstehenden Anspruch, wobei der Teil (81) des Verriegelungsbetätigungsrings (60), der sich am offenen Ende über eine radial Außenwand des Kupplungskörpers (1) erstreckt, in Umfangsrichtung unterbrochen ist.

7. Rohrkupplung nach einem vorstehenden Anspruch, wobei der Teil des Verriegelungsbetätigungsrings (60), der sich am offenen Ende über eine radial Außenwand des Kupplungskörpers (1) erstreckt, an seiner Außenfläche Greifelemente aufweist.

8. Rohrkupplung nach einem vorstehenden Anspruch, wobei der Verriegelungsbetätigungsring (60) am Ende des Kupplungskörpers (1) einrastet.

## Revendications

1. Raccord de tube comprenant un corps de raccord (1) présentant un passage à extrémité ouverte pour recevoir un tube, une pince (41) située dans l'extrémité ouverte du passage présentant une bague de pince (52) et une pluralité de bras flexibles (53) s'étendant globalement axialement de la bague de pince dans le passage, le passage présentant une surface conique (43) ocnvergeant vers l'extrémité ouverte et les bras de pince (53) présentant des têtes (54) au niveau de leurs extrémités distales pour se mettre en prise à la fois avec la surface conique (43) et un tube (T) s'étendant, en utilisation, à travers la pince dans le passage pour être comprimées contre le tube par la surface conique avec un mouvement vers l'extérieur de la pince par rapport au passage pour fixer le tube dans le passage ; et
un verrou de pince (44, 56, 60) formé sur la pince, la pince présentant une position rotative verrouillée dans laquelle le verrou maintient la pince (41) dans une position de fixation de tube vers l'extérieur et une position rotative déverrouillée dans laquelle la pince peut se déplacer axialement par rapport au passage pour la libération et la mise en prise d'un tube par la pince ;
dans lequel l'un du corps de raccord et de la pince est muni d'une surface de came (44) et l'autre du corps de raccord et de la pince est muni d'un galet suiveur de came (56), la surface de came étant fournie pour fournir les positions verrouillée et déverrouillée
**caractérisé par** une bague d'actionnement de verrouillage (60) rotative avec la pince pour actionner le verrou, la bague d'actionnement de verrouillage s'étendant sur une paroi radialement extérieure du corps de raccord (1) au niveau de l'extrémité ouverte.

2. Raccord de tube selon la revendication 1, dans lequel la pince (41) et la bague d'actionnement de verrouillage (60) sont chacune dotées d'au moins une caractéristique de mise en prise complémentaire (57, 64) qui s'emboîtent de sorte que la bague d'actionnement de verrouillage peut tourner avec la pince.

3. Raccord de tube selon la revendication 2, dans lequel l'au moins une caractéristique de mise en prise complémentaire est fournie par au moins une patte (57) faisant saillie de la bague de pince axialement à l'opposé de l'extrémité ouverte du passage et par la bague d'actionnement de verrouillage présentant au moins un évidement complémentaire (64) pour recevoir une patte respective.

4. Raccord de tube selon la revendication 1, dans lequel la pince (41) et la bague d'actionnement de verrouillage (60) sont formées d'un seul tenant.

5. Raccord de tube selon la revendication 4, dans lequel la pince (41) et la bague d'actionnement de verrouillage (60) sont formées en une seule pièce moulée.

6. Raccord de tube selon une quelconque revendication précédente, dans lequel la partie (81) de la bague d'actionnement de verrouillage (60) qui s'étend sur une paroi radialement extérieure du corps de raccord (1) au niveau de l'extrémité ouverte est circonférentiellement intermittente.

7. Raccord de tube selon une quelconque revendication précédente, dans lequel la partie de la bague d'actionnement de verrouillage (60) qui s'étend sur une paroi radialement extérieure du corps de raccord (1) au niveau de l'extrémité ouverte présente des caractéristiques de préhension sur sa surface extérieure.

8. Raccord de tube selon une quelconque revendication précédente, dans lequel la bague d'actionnement de verrouillage (60) est fixée par encliquetage à l'extrémité du corps de raccord (1).
